(19) Europäisches Patentamt
European Patent Office
Office européen des brevets

(11) EP 0 695 929 A1

(12) **EUROPÄISCHE PATENTANMELDUNG**

(43) Veröffentlichungstag:
07.02.1996 Patentblatt 1996/06

(51) Int. Cl.⁶: $G01G\ 17/02$, $A24C\ 5/34$

(21) Anmeldenummer: 95111592.2

(22) Anmeldetag: 24.07.1995

(84) Benannte Vertragsstaaten:
AT BE CH DE ES FR GB IT LI NL SE

(30) Priorität: 04.08.1994 DE 4427605

(71) Anmelder: Hauni Maschinenbau
Aktiengesellschaft
D-21033 Hamburg (DE)

(72) Erfinder:
• Schröder, Dierk, Dr.
D-22399 Hamburg (DE)
• Sacher, Dirk
D-21465 Wentorf (DE)
• Straube, Peter
D-21035 Hamburg (DE)

(54) **Verfahren und Vorrichtung zum Bestimmen des Gewichts stabförmiger Artikel der tabakverarbeitenden Industrie**

(57)     Es werden ein Verfahren und eine Vorrichtung zum Bestimmen des Gewichts bzw. der Masse stabförmiger Artikel der tabakverarbeitenden Industrie, insbesondere von umhüllten Tabakstäben beschrieben. Die Artikel (6) werden entlang einer gekrümmten Bahn durch eine Prüfzone (7) gefördert, wo ihre Fliehkraft bestimmt und ein entsprechendes Fliehkraftsignal erzeugt wird. Dieses Kraftsignal wird in einer Auswertanordnung (29) zu einem Dichte- bzw. Massesignal (33) verarbeitet.

Der Zweck dieses Vorgehens besteht darin, die Gewichts- bzw. Massebestimmung von Artikeln der tabakverarbeitenden Industrie ohne eine die Artikel durchdringende Strahlung zu ermöglichen. Der Vorteil der beschriebenen Vorrichtung liegt insbesondere in der direkten Bestimmung der Masse aus dem Fliehkraftsignal.

Fig.1

EP 0 695 929 A1

**Beschreibung**

Die Erfindung betrifft ein Verfahren und eine Vorrichtung zum Bestimmen des Gewichts bzw. der Masse stabförmiger Artikel der tabakverarbeitenden Industrie, insbesondere von umhüllten Tabakstäben einfacher oder mehrfacher Gebrauchslänge.

Es gibt verschiedene Methoden, die Dichte bzw. das Gewicht oder die Masse von Zigaretten oder anderen stabförmigen Artikeln der tabakverarbeitenden Industrie zu bestimmen. Die heute verbreitetste Methode ist die Dichtemessung mit Beta-Strahlung. Hierzu wird üblicherweise ein zu prüfender Zigarettenstrang mit einer Beta-Strahlung durchdrungen und die Intensität der den Strang durchdringenden Strahlung als Maß für die Strangdichte erfaßt. Aus dieser Strangdichte kann auf das Gewicht der im weiteren Produktionsverfahren von dem Strang abgetrennten Zigarettenstäbe einfacher oder mehrfacher Gebrauchslänge geschlossen werden. Diese Methode führt zu akzeptablen Ergebnissen, hat jedoch den Nachteil, daß die Meßgenauigkeit bei konstanter Strahlerintensität mit zunehmender Produktionsgeschwindigkeit abnimmt und daß die Verwendung von radioaktivem Material als Strahlungsquelle sicherheitstechnische Probleme und zunehmend auch Akzeptanzprobleme bei den Verbrauchern aufwirft. Eine andere Methode der Dichtemessung benutzt eine optische Strahlung im infraroten Wellenlängenbereich des Spektrums der elektromagnetischen Wellen. Die Probleme radioaktiver Strahlung treten hierbei zwar nicht auf. Diese Methode erfordert aber in der Regel zusätzlichen Aufwand, um den unerwünschten Einfluß zusätzlicher, die Intensität der Strahlung beeinflussender Charakteristika des Strang- oder Zigarettenmaterials auf das Meßergebnis zu kompensieren. Eine weitere bekannte Möglichkeit der Gewichtsbestimmung ist, Zigaretten oder Artikel aus dem Fertigungsprozeß zu entnehmen und einzeln oder in Gruppen außerhalb des Fertigungsprozesses zu verwiegen. Dies ist eine sehr zuverlässige Methode der Gewichtsbestimmung, die fast beliebige Genauigkeiten zuläßt. Allerdings erlaubt sie nur Stichproben, da auf diese Weise nicht alle hergestellten Artikel gewogen werden können.

Der Erfindung liegt die Aufgabe zugrunde, die Gewichtsbestimmung stabförmiger Artikel der tabakverarbeitenden Industrie weiter zu verbessern.

Gelöst wird diese Aufgabe bei einem Verfahren der eingangs angegebenen Art erfindungsgemäß dadurch, daß die Artikel nacheinander entlang einer gekrümmten Bahn durch eine Prüfzone bewegt werden, daß in der Prüfzone eine auf die Artikel wirkende Fliehkraft (Zentrifugalkraft) gemessen wird und entsprechende Fliehkraftsignale gebildet werden und daß die Fliehkraftsigmale zu das Gewicht der Artikel repräsentierenden Gewichtssignalen verarbeitet werden. Die Fliehkraft, die bei der Bewegung eines Artikels entlang einer gekrümmten Bahn auf diesen Artikel einwirkt, ist direkt von der Masse des Artikels abhängig. Die Messung der Fliehkraft ist daher eine Methode der direkten Masse- bzw. Gewichtsbestimmung der Artikel. Im Gegensatz zum Verwiegen einzelner Artikel außerhalb des Produktionsprozesses kann mit dem Verfahren der Fliehkraftmessung das Gewicht eines jeden produzierten Artikels bestimmt werden.

Fortführungen und weitere Ausgestaltungen des Verfahrens nach der Erfindung sind in den Unteransprüchen 2 bis 4 enthalten. Dabei bietet das Verfahren nach Anspruch 2 den Vorteil des unkomplizierten mathematischen Zusammenhangs zwischen der Fliehkraft und der Artikelmasse. Die Maßnahmen nach Anspruch 3 ermöglichen die Gewichtsbestimmung durch Messung der Fliehkraft bei unterschiedlichen Artikelgeschwindigkeiten. Anspruch 4 enthält Maßnahmen einer bevorzugten Ausgestaltung des Verfahrens nach der Erfindung, wobei die Fliehkraftwirkung bereits vor Erreichen der Prüfzone beginnt und erst nach Verlassen der Prüfzone aufhört.

Bei einer Vorrichtung der eingangs angegebenen Art wird die der Erfindung zugrundeliegende Aufgabe gelöst durch einen Förderer zum Bewegen der Artikel entlang einer gekrümmten Bahn durch eine Prüfzone, Meßmittel zum Erfassen der in der Prüfzone auf die Artikel wirkenden Fliehkraft und zum Erzeugen entsprechender Fliehkraftsignale und eine Auswertanordnung zum Verarbeiten der Fliehkraftsignale zu das Gewicht der Artikel repräsentierenden Gewichtssignalen.

Merkmale von Weiterführungen und vorteilhaften Ausgestaltungen der Vorrichtung nach der Erfindung sind in den Ansprüchen 6 bis 19 angegeben. Dabei enthält Anspruch 6 Merkmale einer derzeit bevorzugten Ausgestaltung der Vorrichtung. Die Ansprüche 7 bis 10 betreffen die Einrichtungen und Mittel zum Erfassen der Fliehkraft während der Bewegung der Artikel durch die Prüfzone. Die Ansprüche 11 bis 13 enthalten Merkmale der verwendeten Kraftsensoren, mit denen der Fliehkraft entsprechende Kraftsignale erzeugt werden. Mit den Merkmalen der Ansprüche 14 und 15 wird erreicht, daß die Fliehkraftmessung weitgehend ohne störende Einflüsse erfolgt, wobei diese Merkmale eine sehr massearme Ausstattung der Meßanordnung erlauben. Die Ansprüche 16 bis 18 betreffen eine vorteilhafte Ausgestaltung der Prüfzone und ihrer Umgebung, die sicherstellt, daß zuverlässige Fliehkraftsignale gewonnen werden können. Die Merkmale des Anspruchs 19 lassen die Fliehkraftmessung bei unterschiedlichen Geschwindigkeiten der Artikel zu.

Das Verfahren und die Vorrichtung nach der Erfindung bieten den Vorteil, daß mit der Fliehkraft eine direkt von der Masse der Artikel abhängige Größe gemessen wird. Diese Messung erfolgt on line und erfaßt alle produzierten Artikel, wobei mit der vorgeschlagenen Methode das Gewicht jedes einzelnen produzierten Artikels bestimmt werden kann ebenso wie auch das mehrerer Artikel zusammen. Damit werden Gewichtsmittelwerte bestimmt. Gemäß der Erfindung braucht keinerlei Strahlung eingesetzt zu werden, so daß die Nachteile sowohl der nuklearen als auch der optischen Meßstrahlung wegfallen. Die erfindungsgemäß gewonnenen Meßwerte sind von weiteren Eigenschaften des Materials der Artikel, die insbesondere die Ergebnisse der Messung mit durchdringender optischer Strahlung verfälschen können, völlig unabhängig. Erreicht wird dies mit geringem konstruktivem wie auch meßtechnischem Aufwand.

Die Erfindung wird nun anhand der Zeichnung näher erläutert.

Es zeigen

Figur 1    einen Querschnitt durch ein Ausführungsbeispiel einer Vorrichtung nach der Erfindung,

Figur 2    einen Querschnitt durch ein zweites Ausführungsbeispiel einer Vorrichtung nach der Erfindung in einer schematischen Darstellung und

Figur 3    eine Ansicht einer teilweisen Trommelabwicklung mit Einlauf-, Prüf- und Auslaufzone in schematischer Darstellung und

Figur 4    einen Querschnitt durch ein drittes Ausführungsbeispiel einer Vorrichtung nach der Erfindung in einer schematischen Darstellung.

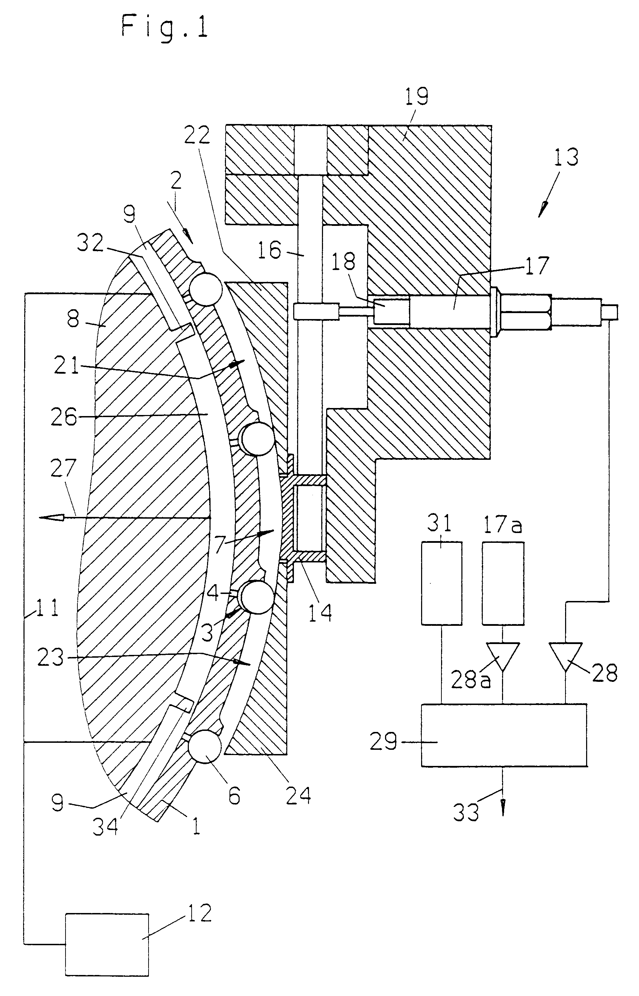

In Figur 1 ist ein Ausführungsbeispiel der Vorrichtung gemäß der Erfindung in einem schematischen Querschnitt dargestellt. Mit 1 ist ein Förderer in Form einer in Pfeilrichtung 2 umlaufenden Trommel bezeichnet, die an ihrem Umfang achsparallele Mulden 3 mit Saugluftöffnungen 4 aufweist. In den Mulden liegen stabförmige Artikel 6 der tabakverarbeitenden Industrie, beispielsweise Tabakstäbe einfacher oder doppelter Gebrauchslänge, die bei der Rotation der Trommel 1 queraxial durch eine Prüfzone 7 bewegt werden. Die Trommel 1 rotiert auf einem stationären Steuerkörper 8 mit einem in Umfangsrichtung verlaufenden Steuerschlitz 9, der mit den Saugluftöffnungen 4 der Mulden 3 korrespondiert. Der Steuerschlitz 9 ist über Saugluftleitungen 11 mit einer Unterdruckquelle 12 verbunden. Dies ist herkömmliche Technik und bedarf insoweit keiner näheren Beschreibung.

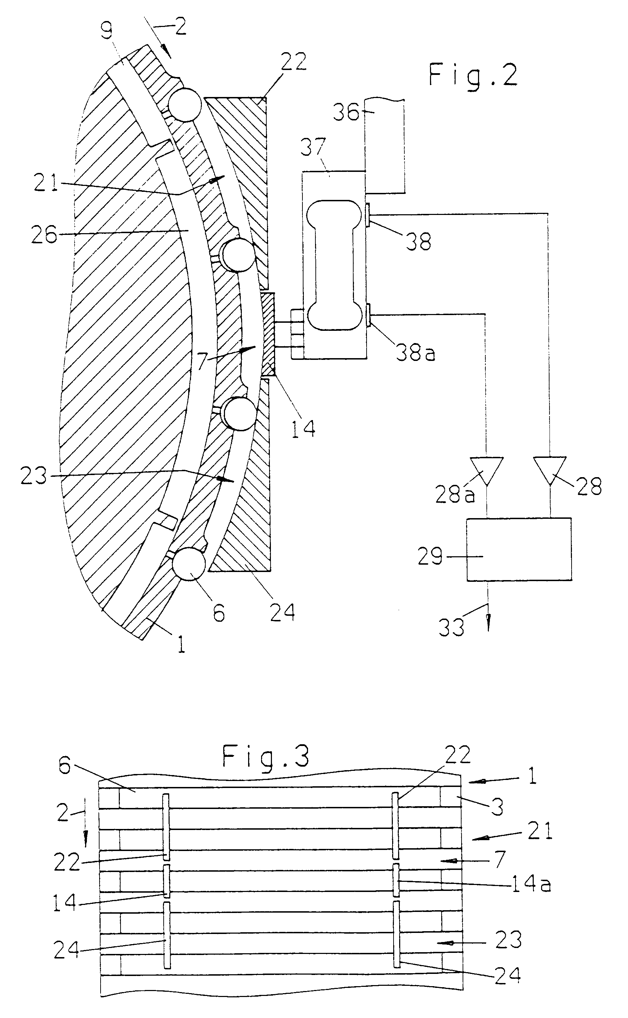

Der Prüfzone 7 ist gemäß der Erfindung ein Meßmittel 13 zum Erfassen der in der Prüfzone auf die Artikel 6 wirkenden Fliehkraft und zum Erzeugen entsprechender Fliehkraftsignale zugeordnet. Dieses Meßmittel 13 weist im gezeigten Ausführungsbeispiel im Bereich der Prüfzone 7 axial nebeneinander zwei als schmale Schienen ausgebildete Aufnahmeelemente 14 und 14a (vgl. auch Fig.3) auf, die jeweils an einem Biegebalken 16 angebracht sind, welcher ein auf einen Drucksensor, beispielsweise ein Piezoelement 17, wirkendes Druckorgan 18 trägt. Wenn es erwünscht oder erforderlich ist, können natürlich auch mehr als zwei Aufnahmeelemente nebeneinander angeordnet sein. Beispielsweise kann zusätzlich zwischen den beiden Aufnahmeelementen 14 und 14a in Figur 3 wenigstens ein drittes Aufnahmeelement vorgesehen sein. Dadurch lassen sich Schwingungen der Artikel, die beim Durchgang durch die Prüfzone entstehen und die Meßergebnisse beeinträchtigen können, wenigstens minimieren. Der Biegebalken und der Kraftsensor sind in einem mit dem Maschinenrahmen verbundenen stationären Gehäuse 19 untergebracht. In der Darstellung der Figur 1 scheint das Aufnahmeelement rückseitig am Gehäuse 19 anzuliegen. In der Realität ist hier ein Spalt zwischen dem Aufnahmeelement 14 und dem Gehäuse vorgesehen, der die für die Messung erforderliche Auslenkung des Aufnahmeelementes radial zur Bewegungsbahn der Artikel erlaubt. Je nach der Art des eingesetzten Kraftsensors und des Aufbaus des Meßmittels beträgt diese Auslenkung einige Nanometer bis etwa 1/10 Millimeter ($10^{-9}$ Meter bis $0,1$ Millimeter). Durch zu große Auslenkungen der Aufnahmeelemente können an den Übergängen zu den Führungsschienen 22 und 24 Stufen entstehen, die die Bewegung der Artikel durch die Prüfzone 7 behindern und die Messung beeinträchtigen können. Das Erfassen der auf die beiden Aufnahmeelemente 14, 14a wirkenden Fliehkraft mit mehreren separaten Kraftsensoren hat den Vorteil, daß das mechanische Übertragungssystem sehr massearm gestaltet werden kann. Aber natürlich können auch beide oder mehr Aufnahmeelemente auf einen gemeinsamen Kraftsensor wirken (nicht dargestellt).

Die Aufnahmeelemente sowie die ganzen Meßmittel der Ausführungsbeispiele sind identisch aufgebaut, so daß hier die Beschreibung eines dieser Meßmittel und seiner Funktion ausreicht.

Die Aufnahmeelemente 14 und 14a sind als Gleitschienen ausgebildet, die in Umfangsrichtung im wesentlichen parallel zur Fördereroberfläche verlaufen. Der Abstand ihrer dem Förderer zugewandten Führungsflächen zum Grund der Mulden 3 ist größer als ein Artikeldurchmesser, so daß eine von weiteren Kräften freie Fliehkraftmessung am Aufnahmeelement erfolgen kann. Der Radius der der Trommel zugewandten gewölbten Gleitfläche der Gleitschienen 14, 14a kann kleiner sein als der Radius der äußeren Oberfläche der Trommel 1, was die Fliehkraft der Artikel erhöht und zu besseren Fliehkraftsignalen führt.

Stromauf der Prüfzone 7 weist die Vorrichtung eine Einlaufzone 21 auf, in der im dargestellten Ausführungsbeispiel zwei etwa parallel zur Bahn der Artikel in Förderrichtung verlaufende schmale Führungsschienen 22 angeordnet sind, deren Abstand zum Grund der Mulden 3 des Förderers 1 wenigstens einem Artikeldurchmesser entspricht. Die innere Führungsfläche der Führungsschienen 22 hat einen Verlauf, der direkt und möglichst stoßfrei zur Führungsfläche des Aufnahmeelements 14 führt. Stromab schließen sich an die Aufnahmeelemente 14 und 14a in einer Auslaufzone 23 zwei weitere Führungsschienen 24 an, welche die Führung der Artikel nach dem Verlassen der Aufnahmeelemente 14 und 14a in der Prüfzone übernehmen. Die Führungsschienen 22 und 24 in der Einlaufzone bzw. der Auslaufzone sowie ihre Anordnung sind in der Figur 3 schematisch angedeutet.

Wie die Figuren 1 und 2 erkennen lassen, ist der Steuerschlitz 9 im Bereich der Prüfzone 7 unterbrochen. Diesem Bereich ist ein separater Steuerschlitz 26 zugeordnet, der über eine Belüftungsleitung 27 mit Atmosphäre verbunden ist. Der separate Steuerschlitz 26 reicht stromauf und stromab über die Prüfzone 7 hinaus in die Einlaufzone 21 bzw. Auslaufzone 23 hinein.

Der Kraftsensor 17 (Piezoelement) ist über einen Verstärker 28 an eine Auswertanordnung 29 angeschlossen. Ebenso ist der dem zweiten Aufnahmeelement 14a zugeordnete Kraftsensor 17a über einen weiteren Verstärker 28a mit der Auswertanordnung 29 verbunden. Außerdem steht die Auswertanordnung 29 mit einem Meßmittel 31 zum Erfassen der Geschwindigkeit der Artikel in der Prüfzone 7 in Verbindung.

Im Betrieb sind die Artikel 6 durch den von der Unterdruckquelle 12 über den Steuerschlitz 9 und die Saugluftöffnungen 4 erzeugten Saugzug während der Rotation der Trommel solange in den Mulden gehalten, wie die Saugluftöffnungen 3 mit dem Steuerschlitz 9 in Verbindung stehen. Passiert eine Saugluftöffnung bei der Drehung der Trommel den Trennsteg 32 zwischen dem Steuerschlitz 9 und dem separaten Steuerschlitz 26, so wird die Wirkung des Unterdrucks unterbrochen. Der Artikel wird nun nicht mehr in der Mulde festgehalten und bewegt sich daher im Bereich der Einlaufzone 21 infolge der auf ihn wirkenden Fliehkraft gegen die Führungsschienen 22. Dabei wird der Artikel weiter in Förderrichtung 2 bewegt bis er im Bereich der Prüfzone 7 mit den Aufnahmeelementen 14 und 14a in Kontakt kommt. Die Aufnahmeelemente 14 und 14a werden mit der auf den Artikel wirkenden Fliehkraft belastet, so daß der Kraftsensor 17 (Piezoelement) entsprechend anspricht. Der Kraftsensor 17 erzeugt ein der Fliehkraft entsprechendes Kraftsignal, das über die Verstärker 28 und 28a zur Auswertanordnung 29 gelangt.

Zusammen mit einem die Geschwindigkeit des betreffenden Artikels in der Prüfzone repräsentierenden Geschwindigkeitssignal des Meßmittels 31 werden die Kraftsignale zu einem Masse- bzw. Gewichtssignal 33 verarbeitet, das die Auswertanordnung an eine nicht dargestellte nachfolgende Steueranordnung weitergibt. Wird die Fliehkraft der Artikel bei einer vorgegebenen konstanten Geschwindigkeit gemessen, so kann der Auswertanordnung als Geschwindigkeitssignal eine entsprechende Konstante vorgegeben werden. Eine Geschwindigkeitsmessung ist in diesem Fall nicht nötig. Realistischer ist aber, daß die Maschinengeschwindigkeit sich während des Betriebes ändert, so daß entsprechend auch die Geschwindigkeit der Artikel in der Prüfzone variiert. Für diesen Normalfall sind die dauernde Geschwindigkeitsmessung mit dem Meßmittel 31 und die Bildung der Geschwindigkeitssignale vorgesehen.

Der Erzeugung der Gewichtsignale 33 ist in der Auswertanordnung 29 prinzipiell die Gleichung

$$m = \frac{F \cdot R}{v^2}$$

zugrundegelegt, die den Zusammenhang zwischen der Fliehkraft F, der Geschwindigkeit v der Artikel, dem Krümmungsradius R der Bewegungsbahn der Artikel und deren Masse m angibt. Die Einflüsse störender weiterer Größen, wie zum Beispiel der Reibung der Artikel an dem Aufnahmeelement 14 auf die Kraftsignale können durch Berücksichtigung entsprechender empirischer Korrekturfaktoren kompensiert und/oder durch reibungsmindernde Auslegung und Konstruktion der Meßmittel 13 minimiert werden.

Nach Verlassen der Aufnahmeelemente 14 und 14a gelangt der Artikel im Bereich der Auslaufzone 23 auf die Führungsschienen 24, die ihn solange führen, bis am Ende des Steuerschlitzes 26 nach dem Passieren eines Trennsteges 34 wieder der Saugzug der Unterdruckquelle 12 durch die Saugluftöffnungen wirkt und den Artikel 6 in der Mulde hält.

Im Ausführungsbeispiel der Figur 1 rotiert die Trommel 1 in Pfeilrichtung 2 im Uhrzeigersinn. Es kann sich als günstig erweisen, bei sonst gleichem Aufbau der Meßmittel die Drehrichtung der Trommel entgegengesetzt zu wählen, weil dadurch der Einfluß von Reibungskräften auf das Fliehkraftsignal vermindert werden kann, was zu zuverlässigeren Meßergebnissen führt.

Die Förderanordnung der Vorrichtung nach Figur 2 stimmt mit der in Zusammenhang mit Figur 1 beschriebenen vollkommen überein. Dasselbe trifft auf die Ausbildung der Einlaufzone 21, der Prüfzone 7 sowie der Auslaufzone 23 mit den entsprechenden Führungsmitteln zu. Die Vorrichtung der Figur 2 unterscheidet sich von der Figur 1 lediglich durch den Aufbau des Meßmittels.

Hier ist am Maschinengestell 36 einseitig ein Biegebalken 37 angebracht, der an seinem freien Ende das Aufnahmeelement 14 trägt. Zum Erfassen der auf das Aufnahmeelement 14 wirkenden Fliehkraft der Artikel 6 trägt der Biegebalken 37 zwei Dehnungsmeßstreifen 38 und 38a, die der Fliehkraft der Artikel entsprechende Kraftsignale bilden und, wieder in Übereinstimmung mit der Vorrichtung nach Figur 1, über Verstärker 28 und 28a an die Auswertanordnung 29 abgeben. Die Auswertanordnung 29 verarbeitet die Kraftsignale wie oben bereits beschrieben zu einem Gewichts- bzw. Massesignal 33.

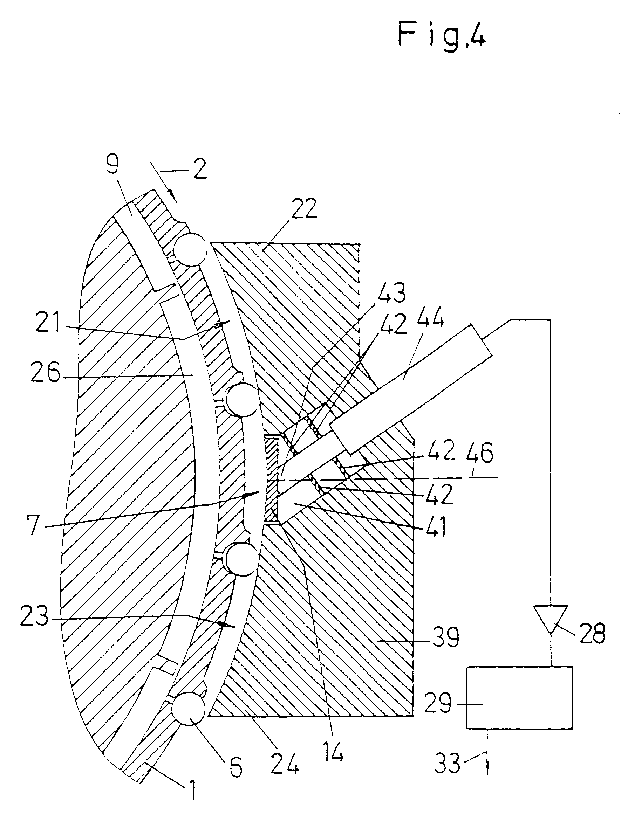

In Figur 4 ist ein weiteres Ausführungsbeispiel der Erfindung dargestellt, bei dem wieder gleiche Teile mit denselben Bezugzeichen versehen sind, wie in den Figuren 1 bis 3. Die Fördereinrichtung mit der Trommel 1 ist dieselbe, wie in den Figuren 1 und 2. Die Führungsschienen 22 und 24 sind Bestandteile eines im wesentlichen plattenartigen Tragkörpers 39, der in einer Ausnehmung 41 an parallelen Membranen 42 einen Bolzen 43 trägt, der seinerseits an seiner Vorderseite mit dem Aufnahmeelement 14 verbunden ist. Rückseitig wirkt das Aufnahmeelement über den Bolzen 43 auf einen Kraftsensor 44, beispielsweise wieder ein Piezoelement, dessen Ausgang, wie oben bereits beschrieben, über den Verstärker 28 an die Auswertanordnung 29 angeschlossen ist. Die Halterung des Bolzens an den Membranpaaren wirkt wie eine Parallelführung und hat den Vorteil, daß der Bolzen nur in Längsrichtung auf den Kraftsensor 44 zu und zurück bewegbar ist. Dadurch wird die Wirkung von Kraftkomponenten, zum Beispiel von Reibungskräften, die beim Meßvorgang quer zu der von den Membranen 42 vorgegebenen Längsrichtung das Aufnahmeelement 14 angreifen, stark reduziert bzw. sogar ganz eliminiert. Der Kraftsensor 44 ist schräg zu einer im Scheitelpunkt der Prüfzone 7 an die Bewegungsbahn der Artikel gelegten Normalen 46 geneigt angeordnet. Der Neigungswinkel beträgt im gezeigten Ausführungsbeispiel etwa 30° und kann je nach den vorliegenden Gegebenheiten unterschiedlich gewählt werden. Diese Schrägstellung bewirkt ebenfalls, daß wenigstens ein Teil der beim Meßvorgang auftretenden Reibungskräfte einander entgegengesetzt gerichtet ist und sich gegenseitig kompensiert.

Soll das Gewicht bzw. die Masse aller Artikel einzeln bestimmt werden, so wird ein Aufnahmeelement 14 eingesetzt, dessen Länge in Umfangsrichtung der Trommel 1 weniger als eine Trommelteilung beträgt, wie das in den Figuren 1 - 3 dargestellt ist. In diesem Fall geht das Fliehkraftsignal zwischen zwei aufeinanderfolgenden Messungen auf Null zurück. Das hat den Vorteil, daß für die Messung kein absolut messendes Meßsystem erforderlich ist, was den Aufwand stark reduziert. Erstreckt sich die Gleitfläche der Aufnahmeelemente 14, 14a in Umfangsrichtung über mehrere Trommelteilungen, so erhält man ein Summensignal, das die Fliehkraftsignale mehrerer Artikel enthält. Hieraus kann ein zeitlich gemitteltes Fliehkraftsignal gewonnen werden.

Ist die Länge der Gleitflächen gleich einer Trommelteilung, so geht das Signal zwischen aufeinderfolgenden Messungen nicht auf Null zurück, repräsentiert aber wieder die Fliehkraft eines einzelnen Artikels. In diesem Fall sollte ein absolut messendes Meßsystem eingesetzt werden.

In der Zeichnung sind in den Figuren 1 und 2 Aufnahmeelemente 14, 14a dargestellt, die über Biegebalken 16, 37 auf die Kraftsensoren 17 bzw. 38, 38a wirken. Eine in Figur 4 dargestellte andere, ebenfalls vorteilhafte Variante besteht darin, daß die Aufnahmeelemente unmittelbar auf die Kraftsensoren wirken, also einen Bestandteil des Kraftsensors darstellen.

Als Kraftsensoren sind Piezoelemente 17 sowie Dehnungsmeßstreifen 38 und 38a angegeben. Natürlich können zum Erfassen der Fliehkraft auch andere geeignete Sensoren eingesetzt werden, beispielsweise solche, die kapazitiv oder induktiv arbeiten.

## Patentansprüche

1. Verfahren zum Bestimmen des Gewichts bzw. der Masse stabförmiger Artikel der tabakverarbeitenden Industrie insbesondere von umhüllten Tabakstäben einfacher oder mehrfacher Gebrauchslänge, dadurch gekennzeichnet, daß die Artikel nacheinander entlang einer gekrümmten Bahn durch eine Prüfzone bewegt werden, daß in der Prüfzone eine auf die Artikel wirkende Fliehkraft (Zentrifugalkraft) gemessen wird und entsprechende Fliehkraftsignale gebildet werden und daß die Fliehkraftsignale zu das Gewicht der Artikel repräsentierenden Gewichtssignalen verarbeitet werden.

2. Verfahren nach Anspruch 1, dadurch gekennzeichnet, daß die Artikel entlang einer Kreisbahn queraxial durch die Prüfzone bewegt werden.

3. Verfahren nach Anspruch 1 oder 2, dadurch gekennzeichnet, daß die Geschwindigkeit der Artikel in der Prüfzone erfaßt und ein entsprechendes Geschwindigkeitssignal gebildet wird und daß das Geschwindigkeitssignal mit dem Fliehkraftsignal zu einem das Gewicht der Artikel repräsentierenden Gewichtssignal verarbeitet wird.

4. Verfahren nach einem der Ansprüche 1 bis 3, dadurch gekennzeichnet, daß die Artikel in achsparallelen Mulden eines rotierenden Förderers mittels Saugluft gehalten werden, daß die Artikel vor oder in der Prüfzone durch Abschalten der Saugluft losgelassen werden, daß sie zur Messung der auf sie einwirkenden Fliehkraft an einem Aufnahmeelement mit einem Kraftsensor entlang durch die Prüfzone bewegt werden und daß die Artikel anschliessend durch Einschalten der Saugluft wieder in den Mulden des Förderers gehalten werden.

5. Vorrichtung zum Bestimmen des Gewichts bzw. der Masse stabförmiger Artikel der tabakverarbeitenden Industrie, insbesondere von umhüllten Tabakstäben einfacher oder mehrfacher Gebrauchslänge, gekennzeichnet durch, einen Förderer (1) zum Bewegen der Artikel (6) entlang einer gekrümmten Bahn durch eine Prüfzone (7), Meßmittel (13) zum Erfassen der in der Prüfzone (7) auf die Artikel wirkende Fliehkraft und zum Erzeugen entsprechender Fliehkraftsignale und eine Auswertanordnung (29) zum Verarbeiten der Fliehkraftsignale zu das Gewicht der Artikel repräsentierenden Gewichtssignalen (33).

6. Vorrichtung nach Anspruch 5, dadurch gekennzeichnet, daß als Förderer (1) eine rotierende Trommel mit achsparallelen Mulden (3) am Umfang zum Aufnehmen der Artikel (6) vorgesehen ist, daß die Mulden (3) mit Sauglüftöffnungen (4) versehen sind und daß Steuermittel (9, 26) zum Anlegen eines Unterdrucks an die Saugluftöffnungen in Umfangsabschnitten außerhalb der Prüfzone (7) und zum Abschalten des Unterdrucks spätestens in der Prüfzone vorgesehen sind.

7. Vorrichtung nach Anspruch 5 oder 6, dadurch gekennzeichnet, daß das Meßmittel (13) als Aufnahmeelement (14, 14a) mit wenigstens einer in der Prüfzone (7) im wesentlichen parallel zur gekrümmten Bahn in Förderrichtung (2) der Artikel (6) verlaufenden Führungsfläche ausgebildet ist und daß das Aufnahmeelement (14, 14a) mit einem Kraftsensor (17, 38, 38a) in Wirkverbindung steht, welcher in Abhängigkeit von einer radial auf das Aufnahmeelement (14, 14a) wirkenden Kraft Kraftsignale erzeugt und mit der die Kraftsignale zu das Gewicht der Artikel (6) repräsentierenden Gewichtssignalen verarbeitenden Auswertanordnung (29) verbunden ist.

8. Vorrichtung nach Anspruch 7, dadurch gekennzeichnet, daß das Aufnahmeelement (14, 14a) selbst Bestandteil eines Kraftsensors ist und unmittelbar auf diesen einwirkt.

9. Vorrichtung nach Anspruch 7, dadurch gekennzeichnet, daß das Aufnahmeelement (14, 14a) über eine Kraftübertragungsanordnung (16, 18; 37) mit einem Kraftsensor (17, 38, 38a) in Wirkverbindung steht.

10. Vorrichtung nach Anspruch 9, dadurch gekennzeichnet, daß das Aufnahmeelement (14, 14a) an einem Schwenkhebel oder Biegebalken (16) mit einem auf den Kraftsensor (17) wirkenden Druckorgan (18) angebracht ist, derart, daß eine radial auf das Aufnahmeelement wirkende Kraft über den Schwenkhebel bzw. Biegebalken (16) und das Druckorgan (18) zum Kraftsensor (17) übertragen wird.

11. Vorrichtung nach einem der Ansprüche 7 bis 10, dadurch gekennzeichnet, daß an einem Biegebalken (37) als Kraftsensor Dehnungsmeßstreifen (38, 38a) vorgesehen sind, daß der Biegebalken (37) einseitig am Maschinengestell (36) befestigt ist und daß das Aufnahmeelement (14, 14a) am freien Ende des Biegebalkens angebracht ist.

12. Vorrichtung nach einem der Ansprüche 7 bis 10, dadurch gekennzeichnet, daß als Kraftsensor (17) ein Piezoelement vorgesehen ist.

13. Vorrichtung nach einem der Ansprüche 7 bis 12, dadurch gekennzeichnet, daß die Länge des Aufnahmeelements (14, 14a) in Umfangsrichtung der Trommel (1) kleiner ist als eine Trommelteilung.

14. Vorrichtung nach einem der Ansprüche 7 bis 13, dadurch gekennzeichnet, daß in der Prüfzone (7) axial nebeneinander wenigstens zwei Aufnahmeelemente (14, 14a) vorgesehen sind, daß die Aufnahmeelemente als in Umfangsrichtung parallel zur Fördereroberfläche verlaufende Gleitschienen ausgebildet sind und daß der Abstand der dem Förderer zugewandten Führungsflächen der Schienen zum Grund der Mulden (3) des Förderers (1) größer ist als ein Artikeldurchmesser.

15. Vorrichtung nach Anspruch 14, dadurch gekennzeichnet, daß jedes Aufnahmeelement (14, 14a) mit einem an die Auswertanordnung (29) angeschlossenen Kraftsensor (17, 38, 38a) in Wirkverbindung steht und daß die Auswertanordnung die Kraftsignale beider Kraftsensoren jeweils zu einem Gewichtssignal verarbeitend ausgebildet ist.

16. Vorrichtung nach einem der Ansprüche 5 bis 15, dadurch gekennzeichnet, daß stromauf vor der Prüfzone (7) eine Einlaufzone (21) vorgesehen ist, daß in der Einlaufzone wenigstens eine etwa parallel zur Bahn der Artikel (6) in Förderrichtung (2) verlaufende Führungsfläche (22) angeordnet ist, deren Abstand zum Grund der Mulden (3) des Förderers (1) wenigstens einem Artikeldurchmesser entspricht, und daß die Steuermittel (9, 26) den Unterdruck in den Saugluftöffnungen (4) der Mulden (3) des Förderers vor Erreichen der Prüfzone (7) bereits in der Einlaufzone (21) abschaltend ausgebildet ist.

17. Vorrichtung nach einem der Ansprüche 5 bis 16, dadurch gekennzeichnet, daß stromab hinter der Prüfzone (7) eine Auslaufzone (23) vorgesehen ist, daß in der Auslaufzone wenigstens eine etwa parallel zur Bahn der Artikel (6) in der Förderrichtung (2) verlaufende Führungsfläche (24) angeordnet ist, deren Abstand zum Grund der Mulden (3) des Förderers (1) wenigstens einem Artikeldurchmesser entspricht, und daß die Steuermittel (9, 26) den Unterdruck in den Saugluftöffnungen (4) der Mulden (3) nach Verlassen der Prüfzone (7) in der Auslaufzone (23) wieder einschaltend ausgebildet ist.

18. Vorrichtung nach Anspruch 16 oder 17, dadurch gekennzeichnet, daß als Führungsflächen (22, 24) in der Einlaufzone (21) und der Auslaufzone (23) jeweils wenigstens zwei parallele Führungsschienen vorgesehen sind.

19. Vorrichtung nach einem der Ansprüche 5 bis 18, dadurch gekennzeichnet, daß Meßmittel (31) zum Erfassen der Geschwindigkeit der Artikel (6) bei ihrer Bewegung durch die Prüfzone (7) und zum Erzeugen entsprechender Geschwindigkeitssignale vorgesehen sind, daß das Geschwindigkeitsmeßmittel (31) an die Auswertanordnung (29) angeschlossen ist und daß die Auswertanordnung die Geschwindigkeitssignale und die Kraftsignale der Kraftsensoren (17, 38, 38a) zu das Gewicht der Artikel repräsentierenden Gewichtssignalen verarbeitend ausgearbeitet ist.

20. Vorrichtung nach einem der Ansprüche 7 bis 19, dadurch gekennzeichnet, daß wenigstens zwei Aufnahmeelemente (14, 14a) mit einem gemeinsamen Kraftsensor (17, 38, 38a) in Wirkverbindung stehen.

21. Vorrichtung nach einem der Ansprüche 7 bis 20, dadurch gekennzeichnet, daß der Krümmungsradius der Gleitfläche der Aufnahmeelemente (14, 14a) kleiner ist als der Trommelradius.

Fig.1

Fig.2

Fig.3

# Fig.4

**Europäisches Patentamt**

## EUROPÄISCHER RECHERCHENBERICHT

Nummer der Anmeldung

EP 95 11 1592

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | GB-A-2 060 870 (MOLINS LTD)<br>* Zusammenfassung *<br>--- | 1,5 | G01G17/02<br>A24C5/34 |
| A | DE-C-42 11 760 (ERNO RAUMFAHRTTECHNIK)<br>* Zusammenfassung *<br>* Spalte 2, Zeile 49 - Spalte 3, Zeile 30 *<br>--- | 1,5 | |
| A | US-A-5 135 113 (DANIEL W. MAYER ET AL.)<br>* Zusammenfassung *<br>----- | 1,5 | |

**RECHERCHIERTE SACHGEBIETE (Int.Cl.6)**

G01G
A24C

Der vorliegende Recherchenbericht wurde für alle Patentansprüche erstellt

| Recherchenort | Abschlußdatum der Recherche | Prüfer |
|---|---|---|
| DEN HAAG | 8.November 1995 | Ganci, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
....................................................................
& : Mitglied der gleichen Patentfamilie, übereinstimmendes Dokument

EPO FORM 1503 03.82 (P04C03)